# EUROPÄISCHE PATENTSCHRIFT

(11) **EP 1 230 541 B1**
(45) Veröffentlichungstag und Bekanntmachung des Hinweises auf die Patenterteilung: **12.08.2009**
(21) Anmeldenummer: 00977413.4
(22) Anmeldetag: 27.09.2000
(51) Int. Cl.: G01N 29/02

(54) **MASSESENSITIVER SENSOR**
MASS-SENSITIVE SENSOR
DETECTEUR SENSIBLE A LA MASSE

(30) Priorität: 15.10.1999 DE 19949739
(43) Veröffentlichungstag der Anmeldung: 14.08.2002
(73) Patentinhaber: Forschungszentrum Karlsruhe GmbH, 76133 Karlsruhe (DE)
(72) Erfinder: BARIE, Nicole, 76297 Stutensee (DE); STAHL, Ullrich, 76187 Karlsruhe (DE); RAPP, Michael, 69214 Eppelheim (DE)
(86) Internationale Anmeldenummer: PCT/EP2000/009424
(87) Internationale Veröffentlichungsnummer: WO 2001/029554

(56) Entgegenhaltungen:
- EP-A- 0 542 469
- EP-A- 0 632 266
- WO-A-91/02975
- DE-A- 19 854 729

## Beschreibung

Die Erfindung betrifft einen Massesensitiver Sensor bestehend aus einem akustischen Oberflächenwellen(OFW)-Bauelement auf Scherwellenbasis.

Ein Ansatz zur Steigerung der Sensitivität und damit zur Verbesserung der Nachweisgrenzen von akustischen Sensoren ist die Verwendung eines speziellen Wellentyps, den Love-Wellen.

Bei Love-Wellen handelt es sich generell um akustische Moden, die sich in einer Schichtstruktur fortpflanzen, welche aus einem Substrat und einer daraufliegenden dünnen wellenführenden Schicht (homogener bzw. kompakter Film, dessen Dicke in der Größenordnung der Wellenlänge liegt) besteht.

Um Love-Wellen anzuregen, muß die transversal akustische Schallgeschwindigkeit in der aufgebrachten Schicht kleiner sein als die im piezoelektrischen Substrat. Nur unter dieser Bedingung ist es möglich, eine SSBW in eine Love-Welle zu überführen. Je größer die Differenz beider Geschwindigkeiten ist, desto effizienter ist diese Umwandlung der Wellenarten und desto höher damit der Sensitivitätsgewinn.

Im Falle von Scherwellen-Bauelementen kann durch das akustisch weichere Schichtmaterial die auf einem Substrat erzeugte Oberflächenwelle an der Oberfläche konzentriert (falls keine periodischen Massegitter vorliegen) bzw. zusätzlich konzentriert werden (falls periodische Massegitter vorliegen), was zu einer erhöhten Empfindlichkeit dieses Wellentyps für Störungen an der Oberfläche führt und auf diese Weise eine hohe Massesensitivität bewirkt.

Abkürzungen die im folgenden verwendet werden:
- LW-Bauelement: = ein auf Love-Wellen basierendes Bauelement
- SSBW: = Scherwelle (Surface Skimming Bulk-Wave)
- RW: = Rayleigh-Wellen
- OFW/SAW: = Oberflächenwelle

### Stand der Technik:

Love-Wellen, insbesondere auch die Massesensitivität von LW-Bauteilen in Abhängigkeit von der Schichtdicke der wellenführenden Schicht, wurden von zahlreichen Autoren theoretisch beschrieben und auch experimentell beobachtet. Dabei wurden verschiedene Konzepte zur Realisation von LW-Sensoren angewandt, die alle auf dem Betrieb des Bauteils als Verzögerungsleitung basieren. Im Folgenden wird eine Auswahl einiger experimenteller Arbeiten kurz vorgestellt.

Kovacs et al. "Love waves for (bio) chemical sensing in liquids", Proc. IEEE Ultrason. Symp. (1992) 281-285 verwenden ST-Quarz-Bauteile (Betrieb als Verzögerungsleitung) und SiO₂ als wellenführende Schicht.

Die verwendeten Bauteile hatten im unbeschichteten Zustand eine Grundfrequenz von 122,5 MHz mit einer Einfügedämpfung von ca. 20 dB.

Es wurden gesputterte SiO₂-Schichten bis zu einer Dicke von 1,46 µm aufgebracht, wobei diese Schichtdicken allerdings deutlich unter der berechneten optimalen Schichtdicke für das gegebene System von ca. 6 µm blieben.

Die Erzeugung dickerer Schichten war den Autoren aufgrund von Adhäsionsproblemen und inneren Spannungen der Schichten nicht möglich.

Die experimentelle Bestimmung der Massesensitivität erfolgte durch Aufbringen von Photoresist-Filmen.

Gizeli, E. "Design considerations for the acoustic waveguide biosensor", Smart Mater. Struct. 6 (1997) 700-706 beschreibt größtenteils experimentelle Betrachtungen an Bauteilen mit polymeren wellenführenden Schichten.

Die hergestellten LW-Sensoren basierten auf OFW-Bauteilen (Verzögerungsleitung) mit dem Substratmaterial Quarz (Y-Schnitt), einer Grundfrequenz von 110 MHz und einer Einfügedämpfung von ca. 29 dB.

Als wellenführende Schicht wurde bevorzugt Poly-methyl-methacrylat (PMMA) verwendet, das mittels Spin-Coating-Prozeß bis zu einer Dicke von 1,6 µm aufgebracht wurde.

Auch hier war die maximal erzeugte Schichtdicke geringer als die theoretisch vorausgesagte optimale Schichtdicke von ca. 3 µm. Der limitierende Faktor war in diesem Fall der schnelle Anstieg der Dämpfung der LW-Bauteile mit der Schichtdicke der wellenführenden PMMA-Schicht.

Die Veränderung der Einfügedämpfung sowie der Resonanzfrequenz der Bauteile wurde in Abhängigkeit von der Schichtdicke des PMMA-Films experimentell beobachtet. Die Untersuchung der Massesensitivität erfolgte durch wiederholte Abscheidung von Langmuir-Blodgett-Filmen und ergab eine 3 (1,0 µm PMMA) bzw. 7-fach (1,6 µm PMMA) erhöhte Sensitivität im Vergleich zum unbeschichteten Quarz-Bauteil.

Wellenführende Schichten in einem Schichtdickenbereich, der das theoretisch berechnete Optimum einschließt, wurden erstmals von Du, Harding et al. "An experimental study of Love wave acoustic sensors operating in liquids", Sens. Act. A60 (1997) 54-61 realisiert.

Sie arbeiteten mit Bauelementen (Verzögerungsleitung), die auf ST-Quarz basieren, mit einer Grundfrequenz von 124 MHz und einer Einfügedämpfung von ca. 23 dB.

Als wellenführende Schicht wurde gesputtertes SiO₂ in einem Schichtdickenbereich zwischen 0 und 7,3 µm aufgebracht.

Um kommerziell erhältliche SAW-Bauteile als massesensitive Transducer in der Biosensorik zum Einsatz zu bringen, muss die SAW-Oberfläche mit einer biosensitiven Schicht aus Proteinen belegt werden, die dann die entsprechenden Analyt-Moleküle in der Probe nachweisen.

Diese Reaktionen erfolgen in wäßrigen Medien.

Der Einsatz in diesen wäßrigen Medien und auch die erforderlichen Immobilisationsprozeduren erfordern jedoch einen Schutz der auf dem Bauteil vorhandenen Strukturen und Bonddrähte aus Aluminium, da diese ansonsten den jeweiligen chemischen Bedingungen nicht standhalten.

Eine Beschichtung der Bauteile mit Quarz schützt die Aluminiumstrukturen auf dem SAW-Bauteil nicht oder nur unzureichend.

Die EP 0 542 469 A1 offenbart einen massesensitiven Sensor, bestehend aus einem akustischen Oberflächenwellen-Bauelement auf Scherwellenbasis, bei dem die aktive Oberfläche zwei verschiedene Schichten trägt, von denen eine der Erzeugung von Love-Wellen dient und die zweite eine Nutzschicht ist, welche mit einem Analyten, der in einem Medium enthalten ist, wechselwirkt.

In der WO 91/02975 A1 ist ein Parylenfilm als dielektrische Isolierungsschicht auf der Oberfläche eines Sensors vorgesehen.

Die JP 02166909 A beschreibt die Aufbringung einer Parylenschicht auf die aktive Oberfläche eines akustischen Oberflächenwellen-Bauelements durch die vakuumgestützte Abscheidemethode CVD (*Chemical Vapour Deposition*).

Die DE 198 54 729 A1 offenbart ein Verfahren zur Herstellung eines Oberflächenwellen-Bauelements, auf das eine Überzugsschicht u. a. aus Parylen auf ein piezoelektrisches Substrat aufgebracht wird. Hierbei wird vermieden, dass die Bauelemente bei der Herstellung in eine Vakuumkammer eingebracht werden müssen, um den Zeitaufwand zu verringern und um auf diese Weise einen hohen Durchsatz zu erzielen.

Aufgabe der Erfindung ist es, einen massensensitiven Sensor der e. g. Art so auszugestalten, daß bei gesteigerter Empfindlichkeit die empfindlichen Aluminiumstrukturen des Sensors ausreichend gegen Korrosion gesichert sind.

Gelöst wird diese Aufgabe durch die Merkmale des Patentanspruchs 1. Die Unteransprüche beschreiben vorteilhafte Ausgestaltungen der Erfindung.

Für viele Fälle ist eine Parylenschicht mit einer Dicke größer als 1,2 µm nicht sinnvoll.

Parylen ist eine Gruppenbezeichnung für thermoplastische Polymere mit über Ethylen-Brücken in 1,4-Position verknüpften Phenylen-Resten. Parylene sind unterhalb ihrer Schmelzpunkte lösungsmittelbeständig, besitzen hervorragende dielektrische Eigenschaften und sind ausgezeichnete Barrierekunststoffe. Sie werden hauptsächlich verwendet als Zwischenschichten für Isolatoren, zur Passivierung von Halbleitern und kraterfreien Beschichtung von gedruckten Leiterplatten.

Hergestellt werden sie durch dehydrierende Dimerisierung von p-Xylol zum Paracyclophan über intermediär sich bildendes 1,4-Chinodimethan, das bei Kondensation aus der Gasphase auf geeigneten Substraten zu dünnen Filmen aus Poly(p-xylylen) polymerisiert.

Neben Poly(p-xylylen) sind u.a. noch die aus den entsprechenden p-Xylol-Derivaten zugänglichen Parylene Poly(2-chlor-p-xylylen)e und Poly(dichlor-p-xylylen)e für eine Beschichtung geeignet.

Das Polymer Parylen-C als Schutzbeschichtung für SAW-Bauteile wird in einer Dicke von 0,2-1,6 µm als wellenführende Schicht aufgebracht.

Die zusätzliche Bedämpfung durch die aufgebrachte Polymerschicht ist gering, die schutzbeschichteten Bauelemente weisen Dämpfungen von -2.5 bis -3.0 dB (bei einem Phasendurchgang von -10°) auf.

Der Parylenfilm ist extrem glatt, was bei der Verwendung von SAW-Bauteilen sehr wichtig ist, da die Ausbreitung der Oberflächenwelle durch Unregelmäßigkeiten der Oberfläche gestört wird und es damit zu zusätzlichen Dämpfungsverlusten und zu verringerter Empfindlichkeit kommt.

Die Schutzbeschichtung soll das SAW-Bauteil vor dem korrosiven Angriff durch wäßrige Lösungen, Säuren, Basen und aggressive Reagenzien schützen. Bei parylenbeschichteten Bauelementen konnte auch nach mehrstündiger Einwirkzeit und sogar nach Erhitzen des Sensors in Salzsäure (0.5 M) kein Angriff beobachtet werden. Der Parylenfilm weist damit einen ausgezeichneten Schutz des Bauteils vor korrosiven Angriffen auf.

Ein weiterer Vorteil der Parylenschicht besteht darin, daß die Nutzschicht besser auf ihr haftet als auf Quarz.

Eine Beschichtung mit Polymethylmethacrylat (PMMA) als wellenführende Schicht hat gegenüber Parylen die folgende Nachteile:
- Keine Vakuumabscheidemethode, das heißt man muß einen Spin-Coating-Prozeß nutzen, der keine glatten und parallel-ebenen Schichten und eine schlechtere Haftung bewirkt als durch im Vakuum vorbehandelte Oberflächen, die dort in-situ durch gas-chemische oder Plasmareinigungsverfahren vorbehandelt werden können.
- PMMA besitzt eine erhöhte intrinsische Dämpfung. Bei der oben genannten Publikation war das sogar der limitierende Faktor, da die Dämpfung im Optimum bereits bei 29 dB lag. Unser Optimum liegt bereits bei einer Dämpfung von 15 dB.

Insgesamt gesehen besticht der erfindungsgemäße Einsatz von Parylen als wellenführende Schicht durch
- seine niedrige Schallgeschwindigkeit und damit durch die Dünnheit der optimal wellenführenden Schicht,
- eine hohe Schutzwirkung aufgrund seiner teilkristallinen Molekularstruktur bereits bei dieser Schichtdicke,
- Spannungsfreiheit, da es sich um eine vakuum-gestützte, kalte und damit niederenergetische Abscheidemethode handelt,
- hohe Planparallelität, da vakuum-gestützte Abscheidemethode und
- hohe Haftung, da die vakuum-gestützte Abscheidemethode eine ideale Vorbehandlung der Oberflächen zuläßt.

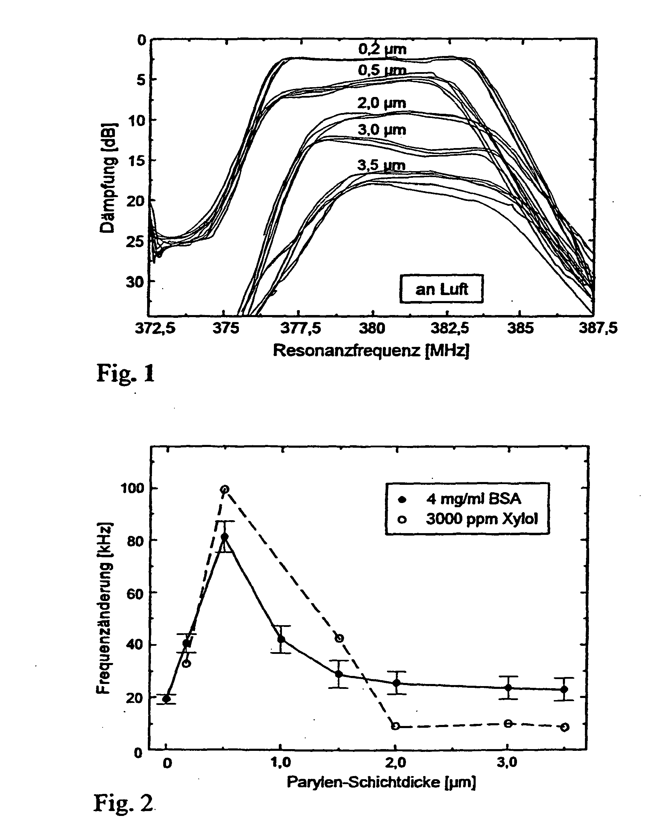

Die Erfindung wird im Folgenden anhand von Ausführungsbeispielen mit Hilfe der Figuren näher erläutert. Dabei zeigt die Figur 1 Transmissionskurven von Sensoren mit unterschiedlicher Parylen-Schichtdicke und die Figur 2 die Änderung der Sensorempfindlichkeit in Abhängigkeit von der Schichtdicke des Parylenfilms.

Wesentliche Unterschiede zwischen dem erfindungsgemäßen Sensor und dem Stand der Technik sind:

### 1. anderes Bauteil d. h. - anderes Substratmaterial

- andere Einfügedämpfung,
- anderer Resonanzfrequenzbereich.

Als Basis der LW-Bauelemente wurden erstmals kommerziell erhältliche Bauteile eingesetzt. Da diese als Massenware produziert werden, sind sie kostengünstig zu erhalten. Im Gegensatz zu den im Eigenbau produzierten Bauteilen der obigen Autoren sind die hier verwendeten Bauteile wesentlich kleiner und weisen extrem geringe Einfügedämpfungen, sowie eine hohe Resonanzfrequenz auf. Das Design der verwendeten Bauteile unterscheidet sich signifikant von dem der einfachen Verzögerungsleitungen. Als Substratmaterial kommt 36°-rot. XY-LiTaO₃ zum Einsatz.

Es wird eine Resonatorstruktur verwendet, die außerhalb der erregenden Transducer passive Reflektoren enthält, die die nach außen abgestrahlte akustische Energie zu 50 % wieder in das Bauelement zurückreflektiert. Alle anderen Autoren verwenden reine Verzögerungsleitungen, die insbesondere bei längeren Verzögerungsstrecken und höheren intrinsischen Dämpfungswerten der wellenführenden Schicht dazu neigen, eine hohe Einfügedämpfung und damit Rauschen aufzuweisen.

**Für das verwendete 36YX.LT STW-Bauelement gelten folgende Werte:**

| | | |
|---|---|---|
| f₀ | 380 MHz | Resonanzfrequenz des Bauteils |
| λ | 10,8 µm | Wellenlänge der Love-Mode |
| V_{S} | 4160 m/s | transversale akustische |
| | | Schallgeschwindigkeit des Substrats |
| r_{S} | 7450 kg/m³ | Dichte des Substrats |
| µ_{S} | 9,4*1010 N/m² | Schermodul des Substrats |

### 2. andere wellenführende Schicht (Polymerbeschichtung) Es wird eine Polymerbeschichtung (Parylen-C) verwendet.

Um kommerziell erhältliche SAW-Bauteile als massesensitive Transducer in der Biosensorik zum Einsatz zu bringen muß die SAW-Oberfläche mit einer biosensitiven Schicht aus Proteinen belegt werden, die dann die entsprechenden Analyt-Moleküle in der Probe nachweisen.

Diese Reaktionen erfolgen in wäßrigen Medien.

Der Einsatz in diesen wäßrigen Medien und auch die erforderlichen Immobilisationsprozeduren erfordern jedoch einen Schutz der auf dem Bauteil vorhandenen Strukturen und Bonddrähte aus Aluminium, da diese ansonsten den jeweiligen chemischen Bedingungen nicht standhalten.

Eine Beschichtung der Bauteile mit Quarz bzw. einer der anderen genannten Schichten schützt die Aluminiumstrukturen auf dem SAW-Bauteil nicht oder nur unzureichend.

Die Massesensitivität eines akustischen Bauteils ist abhängig von der akustischen Energiedichte an der Oberfläche im Verhältnis zur akustischen Gesamtenergie der OFW. Aufgrund des Effektes der wellenführenden Schicht eines auf Love-Wellen basierenden Bauelements (LW-Bauelement) wird die akustische Energiedichte an der Oberfläche erhöht, wodurch eine hohe Sensitivität erzielt werden kann. Die Dicke dieser aufgebrachten wellenführenden Schicht hat einen starken Einfluß auf die Massesensitivität. Mit steigender Schichtdicke durchläuft die Sensitivität ein Maximum.

Dies bedeutet, daß bei gegebenem Schichtsystem und definierter Wellenlänge die Dicke der wellenführenden Schicht optimiert werden muß, um maximale Sensitivität zu erlangen.

Die hohe Sensitivität der LW-Bauelemente beruht auf einem wellenführenden Effekt der Beschichtung. Da es sich bei Love-Wellen um Oberflächenwellen handelt, befindet sich der größte Anteil der akustischen Energie in der wellenführenden Schicht und in oberflächennahen Regionen des Substrates. Die Verteilung dieser Energie und damit die Sensitivität hängt bei gegebener Wellenlänge von der Dicke der Beschichtung ab.

Bei sehr geringen Dicken (h << λ = 10,8µm) der wellenführenden Schicht dringt das akustische Feld tief in das piezoelektrische Substrat ein.

Mit zunehmender Schichtdicke wird die akustische Energie in zunehmendem Maße in der wellenführenden Schicht und damit an der Oberfläche gebunden, wodurch es zu einer Zunahme der Sensitivität kommt.

Wenn schließlich nahezu die gesamte akustische Energie in der Beschichtung konzentriert ist, führt eine weitere Zunahme der Schichtdicke wiederum zu einer Abnahme der Sensitivität, da sich die Energie über die gesamte Dicke der Beschichtung verteilt und daher die Energiedichte der Welle abnimmt.

Damit existiert eine optimale Schichtdicke, bei der maximale Sensitivität für eine gegebene Wellenlänge erhalten wird.

Bei dicken Schichten kann zudem mehr als eine Love-Mode angeregt werden, wobei jedoch die Mode nullter Ordnung sensitiver ist als die Moden höherer Ordnung, da bei dieser die räumliche Verteilung der akustischen Energie am stärksten an der Oberfläche konzentriert ist.

Im allgemeinen nimmt also die Einfügedämpfung bei LW-Bauteilen mit zunehmender Dicke der wellenführenden Schicht zunächst ab, erreicht ein Minimum und nimmt dann mit weiter zunehmender Schichtdicke wieder zu. Für dieses Verhalten sind zwei gegenläufige Effekte verantwortlich. Einerseits wird durch die Umwandlung der SSBW zur Love-Welle die akustische Energie in der wellenführenden Schicht geführt anstatt in das Substrat abzustrahlen, was zu einer Abnahme der Einfügedämpfüng führt. Andererseits bringt das Aufbringen der wellenführenden Schicht selbst eine zusätzliche Bedämpfung mit sich.

Insgesamt führt dies dazu, daß bei geringen Schichtdicken zunächst die Dämpfung des Bauteils abnimmt, da die durch die dünne Beschichtung verursachte Dämpfung zunächst noch vernachlässigbar ist. Erst bei dickeren Schichten wird die Dämpfung in der wellenführenden Schicht bestimmend, so daß die Einfügedämpfung des Bauteils schließlich wieder zunimmt.

In Fig. 1 sind die Transmissionskurven von akustischen Bauelementen mit unterschiedlichen Parylen-Schichtdicken an Luft dargestellt.

Die Einfügedämpfung unbeschichteter Bauteile beträgt etwa 1,4 dB.

Die Dämpfungen der LW-Bauteile sind größer als die der unbeschichteten Bauteile und nehmen mit zunehmender Schichtdicke geringfügig zu.

Dieses Verhalten widerspricht dem theoretisch vorhergesagten und von anderen Autoren experimentell gefundenen Verlauf, wie er eingangs beschrieben wurde. Die Ursache hierfür ist vor allem im speziellen Design der verwendeten Bauteile zu suchen. Einerseits werden die Bauteile als Resonatoren und nicht, wie bei den genannten Untersuchungen, als Verzögerungsleitungen betrieben, wodurch auch die Näherungen theoretischer Ableitungen, die sich im allgemeinen auf Verzögerungsleitung beziehen, nicht angewendet werden können. Andererseits handelt es sich bei den verwendeten Bauelementen um sogenannte "low-loss-Filter", was bedeutet, daß die Einfügedämpfung der unbeschichteten Bauteile mit ca. 1,4 dB an Luft von vornherein schon sehr gering ist. Daher kann sich der Effekt der Dämpfungsabnahme durch die Führung der Welle an der Oberfläche nicht so drastisch auswirken, wie es bei den Bauteilen der anderen Autoren möglich ist. Stattdessen kommt der Beitrag der wellenführenden Schicht zur Dämpfung relativ rasch zum Tragen.

Die für den Betrieb der Bauteile in der Hochfrequenz-Oszillatorelektronik kritische Einfügedämpfung von 18 dB wird erst bei Parylen-Schichtdicken von ca. 3,5 µm erreicht.

### 3. Parylen als wellenführende Schicht in Flüssigkeiten

Die Massesensitivität der LW-Bauteile in Abhängigkeit von der Dicke der aufgebrachten wellenführenden Schicht wurde experimentell durch die Abscheidung von BSA auf der Oberfläche bestimmt. Damit konnte die optimale Schichtdicke für maximale Sensitivität ermittelt werden.

Zur Untersuchung der Massesensitivität der LW-Bauteile in Abhängigkeit von der Parylen-Schichtdicke wurden BSA-Lösungen der Konzentration 2 mg/ml verwendet, um im ermittelten Sättigungsbereich der Adsorption zu arbeiten und damit maximale Sensorsignale zu erhalten. Die so erzielten Frequenzänderungen sind in Abbildung 2 in Abhängigkeit von der Schichtdicke der wellenführenden Schicht dargestellt und beziehen sich auf eine Oberflächenbelegung von ca. 2 ng/mm².

Die Frequenzänderung der Bauelemente bei Abscheidung von BSA hängt von der Dicke der wellenführenden Schicht ab.

Wie in Abbildung 2 dargestellt, geht die daraus resultierende Frequenzänderung mit zunehmender Parylen-Schichtdicke über ein Maximum bei 0,5 µm. Die an diesem Maximum erreichte Frequenzänderung von 82 kHz ist um den Faktor 4,3 größer als die eines unbeschichteten Bauteils (ohne Parylenschicht, jedoch mit Wechselwirkungsschicht). Die erzielte Nachweisgrenze unter Berücksichtigung des dreifachen Rauschens in 20 mM Phosphatpuffer beträgt 2,9 pg/mm². (Im Vergleich dazu kann für unbeschichtete STW-Bauteile unter gleichen Bedingungen eine Nachweisgrenze von 13,3 pg/mm² ermittelt werden.)

Zur Ermittlung der Nachweisgrenze wurde die Resonanzfrequenz der LW-Bauteile in Luft bzw. bei Beprobung mit destilliertem Wasser und 20 mM Phosphat-puffer über 10 min beobachtet. Das Frequenzrauschen an Luft betrug ca. 4 Hz, in Wasser ca. 20 Hz und in 20 mM Phosphatpuffer ca. 40 Hz und war von den unterschiedlichen Parylen-Schichtdicken nahezu unbeeinflußt.

Die ermittelten Nachweisgrenzen der hier vorgestellten LW-Sensoren sind niedrig genug, um Oberflächenbeladungen detektieren zu können, die deutlich unterhalb der von typischen Protein-Monolagen liegen, welche üblicherweise eine Oberflächenbelegung von einigen ng/mm² aufweisen (z. B. 2 ng/mm² für BS, 4 ng/mm² für IgG Antikörper.

Die beschriebenen parylenbeschichteten SAW-Bauteile können neben dem Betrieb in flüssiger Phase auch zur Sensitivitätssteigerung beim Betrieb in der Gasphase genutzt werden.

### 4. Parylen als wellenführende Schicht in der Gasphase.

Da die aufgebrachte Parylenbeschichtung die Aluminiumstrukturen der Bauteile ausgesprochen gut vor korrosiven Angriffen schützt und extrem glatt ist, wurde diese Beschichtung auch für den Einsatz in der Gassensorik getestet. Dort soll sie als Zwischenschicht zur Anpassung der Oberflächenenergien von Substrat und sensitiver Polymerschicht und zum Schutz der Strukturen vor korrosiven Gasen verwendet werden.

Durch Aufbringen einer wellenführenden Schicht auf STW-Bauelemente (nicht jedoch bei RW-Bauelementen) ist in der Gassensorik ebenfalls eine Sensitivitätssteigerung aufgrund der Anregung von Love-Wellen zu erwarten. Daher wurde die Abhängigkeit der Massesensitivität der parylenbeschichteten LW-Bauelemente mit zunehmender Schichtdicke auch in der Gasphase untersucht.

Zum Betrieb in der Gasphase werden die LW-Sensoren mit einem Sorptionspolymer beschichtet, welches den nachzuweisenden Analyten an der Sensoroberfläche anreichert. Die dadurch erzeugte Masseänderung kann durch die Änderung der Resonanzfrequenz des Bauteils detektiert werden. Im Gegensatz zum Betrieb in Flüssigkeiten ist dieses Detektionsprinzip reversibel, der Sensor muß nicht regeneriert werden. Jedoch muß beim Betrieb des parylenbeschichteten LW-Bauteils darauf geachtet werden, daß die Parylenschicht möglichst keine Sorptionseffekte aufweist, welche die Messung durch Verzögerung oder Überhöhung der Signale beeinträchtigen können.

Wie durchgeführte Untersuchungen ergaben, zeigen parylenbeschichtete Bauteile selbst nur eine geringe Frequenzänderung bei Beprobung mit organischen Lösungsmitteldämpfen. Hierzu wurden dick parylenbeschichtete Sensoren (ca. 340 nm) mit Xylol beprobt, da dessen Quellwirkung auf Parylen bereits literaturbekannt ist (gor89). Eine Beprobung mit 760 ppm Xylol in N₂ führte zu einem Signal von unter 2 kHz.

Da als Zwischenschicht eine erheblich geringere Filmdicke zwischen 50 und 100 nm angestrebt und im Falle einer 340 nm dicken Schicht ein Sorptionseinfluß von maximal 1% des Gesamt-Sensorsignals (Parylen- + Sorptionsschicht) verursacht wird, kann der Beprobungseinfluß als vernachlässigbar eingestuft werden.

Zur Stabilisierung der Parylenschicht wurden alle Sensoren im Grobvakuum für 3 Stunden bei 150°C getempert.

Im nachfolgenden Schritt wurden alle Sensoren mit einer dünnen Sorptionspolymerschicht aus Polymethacrylsäurebutylester (PBMA) beschichtet. Zur Kontrolle des Love-Wave Effektes wurden auch Sensoren ohne Parylenfilm auf die gleiche Weise mit PBMA behandelt. Die Sorptionsschicht wurde so gering wie möglich gehalten (ca. 100 nm), um die Ausbreitung der Love-Wellen möglichst wenig zu beeinflussen, jedoch ausreichend dick, um Beprobungseffekte messen zu können.

Die auf diese Weise hergestellten Sensoren wurden nacheinander im Wechsel mit 3000 ppm Xylol in N₂ beprobt und mit einem N₂-Strom gespült. Durch Auswertung der Frequenzdifferenzen zwischen den Phasenkurven im beprobten bzw. gespülten Zustand bei einer Phasenlage von -115° wurde das resultierende Signal erhalten. In Fig. 2 sind die bei Beprobung mit 3000 ppm Xylol erhaltenen Frequenzänderungen in Abhängigkeit von der Schichtdicke aufgetragen.

Gegenüber den Sensoren, die nur mit PBMA beschichtet wurden (s. Abb.2, 0 µm Parylen), wiesen die Love-Wave-Sensoren mit einem 0.5 µm dicken Parylenfilm und einer PBMA-Sorptionsschicht ein um den Faktor 5.3 fach höheres Signal bei gleicher Xylolkonzentration auf.

Ein Vergleich mit den Messungen in Flüssigkeiten (BSA-Abscheidung) zeigt einen ähnlichen Kurvenverlauf mit einem Maximum bei ebenfalls 0,5 µm.

Damit kann Parylen als eine vielseitige Beschichtung für akustische Oberflächenwellen-Bauelemente sowohl in der Gas- als auch in der Flüssigkeitssensorik eingesetzt werden.

## Patentansprüche

1. Massesensitiver Sensor, bestehend aus einem akustischen Oberflächenwellen-Bauelement auf Scherwellenbasis, bei dem die aktive Oberfläche zwei verschiedene Schichten trägt, von denen eine der Erzeugung von Love-Wellen dient und die zweite eine Nutzschicht ist, welche mit einem Analyten, der in einem Medium enthalten ist, wechselwirkt, **dadurch gekennzeichnet, dass** eine Parylenschicht mit einer Dicke zwischen 0,2 und < 1,6 µm der Erzeugung von Love-Wellen dient, wobei die Parylenschicht durch eine vakuumgestützte Abscheidmethode erzeugt wurde.

2. Massesensitiver Sensor nach Anspruch 1, **dadurch gekennzeichnet, dass** für den Fall, dass das Medium, in dem der Analyt enthalten ist, eine Flüssigkeit ist, die Nutzschicht eine biosensitive Schicht aus Proteinen ist.

3. Massesensitiver Sensor nach Anspruch 2, **dadurch gekennzeichnet, dass** die Parylenschicht zwischen 0,4 und 0,6 µm dick ist.

4. Massesensitiver Sensor nach Anspruch 1, **dadurch gekennzeichnet, dass** für den Fall, dass das Medium, in dem der Analyt enthalten ist, ein Gas ist, die Nutzschicht ein Sorptionspolymer mit einer Dicke zwischen 100 und 200 nm ist.

5. Massesensitiver Sensor nach Anspruch 4, **dadurch gekennzeichnet, dass** die Parylenschicht zwischen 0,4 und 0,8 µm dick ist.

6. Massesensitiver Sensor nach einem der Ansprüche 1 bis 5, **dadurch gekennzeichnet, dass** das akustische Oberflächenwellen-Bauelement als Resonator aufgebaut ist.

7. Massesensitiver Sensor nach einem der Ansprüche 1 bis 6, **dadurch gekennzeichnet, dass** das akustische Oberflächenwellen-Bauelement für Arbeitsfrequenzen zwischen 200 und 1000 MHz ausgelegt ist.

8. Massesensitiver Sensor nach einem der Ansprüche 1 - 7, **dadurch gekennzeichnet, dass** das Substratmaterial des akustischen Oberflächenwellen-Bauelements Lithiumtantalat ist.

## Claims

1. Mass-sensitive sensor, comprising an acoustic surface wave component based on shear waves, where the active surface supports two different layers, one of which is for generating Love waves and the other is a wear layer, which interacts with an analyte contained in a medium, **characterized in that** a parylene layer with a thickness of between 0.2 and < 1.6 µm is used to generate Love waves, wherein the parylene layer has been generated by means of a vacuum-supported deposition method.

2. Mass-sensitive sensor according to Claim 1, **characterized in that** in the case where the medium containing the analyte is a liquid, the wear layer is a bio sensitive layer of proteins.

3. Mass-sensitive sensor according to Claim 2, **characterized in that** the thickness of the parylene layer is between 0.4 and 0.6 µm.

4. Mass-sensitive sensor according to Claim 1, **characterized in that** in the case where the medium containing the analyte is a gas, the wear layer is a sorption polymer with a thickness of between 100 and 200 nm.

5. Mass-sensitive sensor according to Claim 4, **characterized in that** the thickness of the parylene layer is between 0.4 and 0.8 µm.

6. Mass-sensitive sensor according to one of Claims 1 to 5, **characterized in that** the acoustic surface wave component is constructed as a resonator.

7. Mass-sensitive sensor according to one of Claims 1 to 6, **characterized in that** the acoustic surface wave component is designed for operating frequencies of between 200 and 1000 MHz.

8. Mass-sensitive sensor according to one of Claims 1 - 7, **characterized in that** the substrate material of the acoustic surface wave component is lithium tantalite.

## Revendications

1. Détecteur sensible à la masse, formé d'un composant d'ondes acoustiques de surface, fondé sur les ondes de cisaillement, dans lequel la surface supérieure active porte deux couches différentes dont la première sert à générer des ondes transversales, la seconde étant une couche utile qui coopére avec un analyte contenu dans un milieu,
**caractérisé en ce qu'** une couche de parylène d'une épaisseur comprise entre 0,2µm et = 1,6 µm, sert à générer des ondes de surface, la couche de parylène étant obtenue par un procédé de dépôt sous vide.

2. Détecteur sensible à la masse selon la revendication 1,
**caractérisé en ce qu'**
au cas où le milieu contenant l'analyte est un liquide, la couche utile est une couche biosensible vis à vis des protéines.

3. Détecteur sensible à la masse selon la revendication 2,
**caractérisé en ce que**
la couche de parylène a une épaisseur comprise entre 0,4µm et 0,6 µm.

4. Détecteur sensible à la masse selon la revendication 1,
**caractérisé en ce que**
dans le cas où le milieu contenant l'analyte est un gaz, la couche utile est un polymère fonctionnant par sorption, d'une épaisseur comprise entre 100 nm et 200 nm.

5. Détecteur sensible à la masse selon la revendication 4,
**caractérisé en ce que**
la couche de parylène a une épaisseur comprise entre 0,4µm et 0,8 µm.

6. Détecteur sensible à la masse selon l'une des revendications 1 à 5,
**caractérisé en ce que**
le composant à ondes de surface, acoustiques est réalisé comme un résonateur.

7. Détecteur sensible à la masse selon l'une des revendications 1 à 6,
**caractérisé en ce que**
le composant d'ondes acoustiques de surface est conçu pour des fréquences de travail comprises entre 200 MHz et 1 000 MHz.

8. Détecteur sensible à la masse selon l'une des revendications 1 à 7,
**caractérisé en ce que**
le substrat du composant à ondes acoustiques de surface est du tantalate de lithium.
